# EUROPÄISCHE PATENTSCHRIFT

(11) **EP 2 760 365 B1**
(45) Veröffentlichungstag und Bekanntmachung des Hinweises auf die Patenterteilung: **05.06.2019**
(21) Anmeldenummer: 12770445.0
(22) Anmeldetag: 26.09.2012
(51) Int. Cl.: A61C 1/08, A61C 13/00, A61C 9/00

(54) **VERFAHREN ZUR ÜBERPRÜFUNG EINER BOHRSCHABLONE ZUR HERSTELLUNG EINES IMPLANTATGESTÜTZTEN ZAHNERSATZES**
METHOD FOR EXAMINING A DRILLING JIG FOR PRODUCING AN IMPLANT-SUPPORTED DENTAL PROSTHESIS
PROCÉDÉ PERMETTANT DE VÉRIFIER UN GABARIT DE FORAGE SERVANT À PRODUIRE UNE PROTHÈSE DENTAIRE SOUTENUE PAR UN IMPLANT

(30) Priorität: 26.09.2011 DE 102011083439
(43) Veröffentlichungstag der Anmeldung: 06.08.2014
(73) Patentinhaber: Sirona Dental Systems GmbH, 64625 Bensheim (DE)
(72) Erfinder: HEHN, Stefan, 64625 Bensheim (DE)
(74) Vertreter: Sommer, Peter
(86) Internationale Anmeldenummer: PCT/EP2012/068900
(87) Internationale Veröffentlichungsnummer: WO 2013/045462

(56) Entgegenhaltungen:
- EP-A2- 0 834 292
- WO-A1-2004/076106
- WO-A2-03/060825
- WO-A2-2006/111964
- WO-A2-2008/020054
- WO-A2-2012/104361
- US-A1- 2009 092 948

## Beschreibung

### Technisches Gebiet

Die Erfindung betrifft ein Verfahren zur Überprüfung einer Bohrschablone zur Herstellung eines implantatgestützten Zahnersatzes vor der Durchführung einer Implantatbohrung, wobei die hergestellte Bohrschablone auf Zahnstrukturen eines mit dem Zahnersatz zu versehenden Kieferbereichs aufgesetzt wird.

### Stand der Technik

Aus dem Stand der Technik sind mehrere Verfahren zur Herstellung von Bohrschablonen bekannt, wobei die Ausrichtung der Bohrerführungen meist an einem Gipsmodell mit geplanten Implantatbohrungen oder unter Verwendung von Einsteckstiften überprüft werden, die in die Bohrerführungen gesteckt werden und überprüft wird, ob die Spitzen der Einstiegstifte auf Markierungen eines Kontrollblatts zeigen.

WO 03/060825 A2 offenbart ein Verfahren zur Überprüfung einer Bohrschablone, wobei die hergestellte Bohrschablone auf einen Kiefer aufgesetzt wird und anschließend eine dreidimensionale Volumenaufnahme mittels einer CT-Vorrichtung oder einer MRI-Vorrichtung aufgenommen wird. Im Röntgenbild sind die Trajektorien der Bohrführungen in der Bohrschablone sichtbar. In einem ersten Schritt des Herstellungsverfahrens wird die Bohrschablone mit provisorischen Bohrungen hergestellt und auf den Kiefer aufgesetzt, wobei anschließend die 3D-Röntgenaufnahme des Kiefers mit der aufgesetzten Bohrschablone aufgenommen wird. Im zweiten Schritt werden die Trajektorien dieser provisorischen Bohrungen überprüft. Zur Korrektur der Bohrschablone werden dann im dritten Schritt korrekte Präzisionsbohrungen durchgeführt.

WO 2008/020054 A2 offenbart ein Verfahren zur Positionierung eines Patienten während einer Röntgenaufnahme. Dabei wird eine Aufbissvorrichtung verwendet, die eine Aufbissplatte umfasst. Aus dieser Aufbissplatte kann dann eine Bohrschablone hergestellt werden, indem Bohrungen entlang der geplanten Implantatsachsen gebohrt werden und anschließend in diese Bohrungen bzw. Bohrhülsen, die als Führungsmittel für einen Bohrer dienen, Messgeräte eingesetzt werden.

EP 0 834 292 A2 offenbart ein Verfahren zur Durchführung von Implantatbohrungen, wobei die Achsen der durchgeführten Implantatbohrungen sowie die Achsen der einzusetzenden Implantate daraufhin geprüft werden, ob sie innerhalb eines festgelegten Toleranzbereichs parallel zueinander sind. Die Verwendung einer Bohrschablone ist nicht offenbart.

US 2009/092948 A1 offenbart ein Verfahren zur Herstellung einer Bohrschablone, wobei ein dreidimensionales Röntgenbild des Kiefers verwendet wird, um die Implantatplanung durchzuführen und die Achsen der einzusetzenden Implantate festzulegen. Anschließend wird die Bohrschablone vollautomatisch mittels einer CAN-Vorrichtung hergestellt. Ein Verfahren zur Überprüfung der hergestellten Bohrschablone ist nicht offenbart.

WO 2006/111964 A2 offenbart ein Verfahren zur Durchführung von Implantatbohrungen, wobei eine Bohrschablone verwendet wird, die auf den Kiefer des Patienten aufgesetzt wird. Zur Herstellung der Bohrschablone wird im ersten Schritt eine dreidimensionale Röntgenaufnahme mittels einer CT-Vorrichtung durchgeführt. Anschließend werden die Implantatsachsen festgelegt und die Bohrschablone hergestellt. Während der Durchführung der Implantatbohrungen mittels der Bohrschablone wird der Zahnbohrer unter Verwendung von Infrarotsensoren mitverfolgt, so dass die Position des Zahnbohrers ermittelt wird und mittels eines Monitors in der dreidimensionalen Röntgenaufnahme dargestellt wird. Dadurch kann der Zahnarzt während der Durchführung der Implantatbohrung kontrollieren, ob die Behandlung planmäßig erfolgt.

WO 2004/076106 A1 offenbart ein Verfahren und eine Vorrichtung zur Kontrolle der Position von Bohrhülsen, wobei die Lage der Bohrhülsen in der Bohrschablone mit den Lagen einer vorgehenden Planung im Computermodell verglichen wird. Die Lage der Bohrhülsen wird dabei mittels einer Meßvorrichtung erfasst, die in einem Abstand zu den Bohrhülsen angeordnet ist. Bei einer ersten Vorrichtung werden Bohrhülsen in die Bohrungen der Bohrschablone gesteckt. Anschließend werden Meßstifte in die Bohrhülsen gesteckt. Die Meßstifte setzen dann mit der Spitze in einer Meßebene auf einem Blatt Papier mit gedruckten Referenzpunkten auf. Die Berührungspunkte können dann mit den Referenzpunkten verglichen werden, um die Lage der Bohrhülsen in der Bohrschablone zu überprüfen. In einer alternativen Ausführungsform der Vorrichtung wird die Bohrschablone mittels einer Kamera aufgenommen und die axiale und die winkelmäßige Position der Bohrhülsen anhand der elliptischen Abbildungen der Ränder der Bohrhülsen ermittelt.

Aus EP 1 062 916 B1 ist ein Verfahren zur Herstellung eines individuell gefertigten, durch ein Implantat gestützten Zahnersatzes offenbart. Zur Herstellung des Zahnersatzes wird eine Negativabformung des Kiefers hergestellt. Im nächsten Schritt wird anhand dieser Negativabformung ein Arbeitsmodell hergestellt. Im nächsten Schritt wird am Arbeitsmodell ein Manipulierimplantat angebracht, das in seinen Abmessungen einem einzusetzenden Implantat entspricht. Die Manipulierimplantate werden in das Arbeitsmodell so eingesetzt, dass sie nicht hinausragen. Im nächsten Schritt wird provisorisch ein Hilfselement an jedem der Manipulierimplantate angebracht. Im nächsten Schritt erfolgt eine dreidimensionale Vermessung, wobei anschließend aus den Daten der Geometrie des Arbeitsmodells mit den darauf angeordneten Hilfselementen die genaue Lage der Implantate im Kieferbereich des Patienten bestimmt wird.

Ein Nachteil dieses Verfahrens ist, dass zur Überprüfung der Bohrerführungen der Bohrschablone zunächst ein Arbeitsmodell des Kieferbereichs erstellt werden muss und im zweiten Schritt Manipulierimplantate, die der tatsächlichen Abmessungen der einzusetzen Implantate entsprechen, in das Arbeitsmodell eingesetzt werden müssen. Beim Herstellen des Arbeitsmodells und der Manipulierimplantate sowie beim Einsetzen der Manipulierimplantate in das Arbeitsmodell können Produktionsfehler und Positionierungsfehler zu einer fehlerhaften Ausrichtung und Lage der mittels der Bohrschablone durchzuführenden Implantatbohrungen führen.

Die Aufgabe der vorliegenden Erfindung besteht daher darin, ein Verfahren zur Überprüfung einer Bohrschablone bereitzustellen, bei dem Herstellungsfehler und Positionierungsfehler möglichst vermieden werden, um eine sichere Überprüfung der Bohrschablone zu gewährleisten.

### Darstellung der Erfindung

Die Erfindung betrifft ein Verfahren zur Überprüfung einer Bohrschablone vor der Durchführung einer Implantatbohrung für einen implantatgestützten Zahnersatz, wie in Anspruch 1 definiert.

Die Bohrschablone kann zur Durchführung einer Implantatbohrung oder mehrerer Implantatbohrungen mit beliebigen Ausrichtungen geeignet sein. Die Zahnstrukturen können Zähne, Zahnstümpfe und/oder Zahnkronen in der Mundhöhle des Patienten sein. Die Zahnstrukturen des mit dem Zahnersatz zu versehenden Kieferbereichs können auch Zahnmodelle eines Abdruckmodells dieses Kieferbereichs, beispielsweise aus Gips, sein. Der Messkörper kann einen Passkörper aufweisen, der beispielsweise in Form eines Zylinders oder sternförmig im Querschnitt gestaltet sein kann, um passgenau in die zylindrische Bohrführung gesteckt zu werden. Der Messkörper muss so gestaltet sein, dass seine Lage und seine Ausrichtung mittels des optischen dreidimensionalen Messverfahrens eindeutig ermittelt werden können. Der Messkörper kann beispielsweise eine geometrische Grundform, wie einen Konus, einen Quader, eine Kugel oder eine Pyramide, aufweisen. Der Messkörper kann auch mit mehreren optischen Markierungen versehen sein, die beispielsweise in Form eines Dreiecks zueinander angeordnet sind und die eine eindeutige Bestimmung der Lage und der Ausrichtung des Messkörpers in Relation zu dem sichtbaren Teil der Zahnstrukturen ermöglichen. Das verwendete optische dreidimensionale Messverfahren kann beispielsweise das Streifenprojektionsverfahren zur optischen dreidimensionalen Erfassung von Zähnen sein.

Die Lage und die Ausrichtung des Messkörpers werden in Relation zu den sichtbaren Zahnstrukturen, die nicht von der Bohrschablone bedeckt sind, bestimmt. Die Anschlagsfläche dient als Anschlag sowohl für den Messkörper als auch für den zu verwendenden Bohrer, so dass bei Kenntnis der Abmessungen des einzusetzenden Bohrers die herzustellende Implantatbohrung in Relation zu den Zahnstrukturen simuliert werden kann.

Mittels bekannter Mustererkennungverfahren kann der sichtbare Teil der Zahnstrukturen, der nicht von der Bohrschablone bedeckt ist, sowohl in den Messdaten der optischen Vermessung für die Überprüfung als auch in Messdaten einer vorangegangenen Vermessung für die Implantatplanung erkannt und in Überlagerung gebracht werden. Dadurch können die Lage und die Ausrichtung des Messkörpers relativ zu den ursprünglichen Messdaten für die Implantatplanung bestimmt werden. Die ursprünglichen Messdaten für die Implantatplanung können beispielsweise überlagerte Messdaten einer dreidimensionalen optischen Vermessung und Messdaten einer dreidimensionalen Röntgenmessung umfassen.

Die Anschlagsfläche an der Bohrschablone dient als Anschlag sowohl beim Einsetzen des Messkörper als auch für den zu verwendenden Bohrer, so dass in Kenntnis der Abmessungen des Bohrers und der Lage und Ausrichtung des Messkörpers das Ist-Implantatbohrungsmodell der durchzuführenden Implantatbohrung erzeugt werden kann.

Das Soll-Implantatbohrungsmodell wird bei der vorangegangenen Implantatplanung erzeugt und stellt eine optimale Implantatbohrung unter Berücksichtigung unterschiedlicher Faktoren dar. Die zu berücksichtigenden Faktoren können beispielsweise die Abmessungen des implantatgestützten Zahnersatzteils, der Verlauf des Kieferknochens sowie der Verlauf der Nerven und der Zahnwurzeln sein. Durch den Vergleich des Ist-Implantatbohrungsmodells mit dem optimalen Soll-Implantatbohrungsmodell kann eine mögliche Abweichung festgestellt werden, die zu einer fehlerhaften Implantatbohrung führen würde.

Der Vorteil des vorliegenden Verfahrens liegt darin, dass die Bohrschablone unmittelbar im Mund des Patienten oder an einem Abdruckmodell bereits vor der Durchführung der Implantatbohrung überprüft werden kann. Dadurch kann bei der Überprüfung ermittelt werden, ob die Bohrschablone schief auf die Zahnstrukturen aufgesetzt wurde. Ursächlich dafür können beispielsweise Herstellungsfehler, wie abstehende Erhöhungen oder Späne zwischen einer Auflagefläche der Bohrschablone und der Oberfläche der Zahnstrukturen sein. Die Bohrschablone kann dann anschließend entsprechend nachbearbeitet werden, damit beim Aufsetzen der Bohrschablone die geplanten Bohrführungen der Bohrschablone, wie gewünscht, relativ zu den Zahnstrukturen positioniert und ausgerichtet sind.

Darüber hinaus können Messfehler die bei der optischen Erfassung des Präparationsgebietes erzeugt werden können, korrigiert werden.

Vorteilhafterweise kann, falls beim Vergleich des Ist-Implantatbohrungsmodells mit dem Soll-Implantatbohrungsmodell die Abweichung einen bestimmten Toleranzbereich überschreitet, eine Fehlermeldung erzeugt werden.

Die Fehlermeldung wird beim Überschreiten des Toleranzbereichs, wie beispielsweise einer Abweichung der Ausrichtung des Ist-Implantatbohrungsmodells von mehr als 5°, erzeugt. Der Benutzer bekommt dadurch eine Rückmeldung und kann die Bohrschablone entsprechend nachbearbeiten.

Die Fehlermeldung beim Überschreiten des Toleranzbereichs kann akustisch mittels eines Tongebers oder optisch mittels der Anzeigevorrichtung erfolgen.

Vorteilhafterweise kann das Ist-Implantatbohrungsmodell und/oder das Soll-Implantatbohrungsmodell in Relation zu den Messdaten der optischen Vermessung für die Überprüfung und/oder in Relataion zu den ursprünglichen Messdaten für die Implantatplanung mittels einer Anzeigevorrichtung angezeigt werden.

Das Ist-Implantatbohrungsmodell kann also zusammen mit den ursprünglichen Messdaten für die Implantatplanung, die Röntgendaten und optische Messdaten umfassen können, sowie zusammen mit den optischen Messdaten für die Überprüfung mittels der Anzeigevorrichtung dargestellt werden.

Dadurch kann der Benutzer die Lage des simulierten Ist-Implantatbohrungsmodells im Hinblick auf kritische Strukturen aus den Röntgendaten, wie den Verlauf des Kieferknochens, der Nerven oder der Gingiva, und/oder im Vergleich zum Soll-Implantatbohrungsmodell visuell überprüfen. Vorteilhafterweise kann aus den Messdaten der optischen Vermessung für die Überprüfung ein virtuelles Ist-Messkörpermodell erzeugt werden.

In Kenntnis der Abmessungen des Messkörpers wird das virtuelle Ist-Messkörpermodell erzeugt. Unter Verwendung bekannter Mustererkennungsverfahren können dann die Lage und die Position dieses Ist-Messkörpermodels relativ zu den Messdaten der optischen Vermessung für die Überprüfung und damit zu den aufgenommenen sichtbaren Zahnstrukturen bestimmt werden.

Das erzeugte Ist-Messkörpermodell wird mit einem Soll-Messkörpermodell aus einer vorangegangenen Implantatplanung verglichen.

Das Soll-Messkörpermodell weist eine optimale Lage und Ausrichtung des Messkörpers in Relation zu den Zahnstrukturen für eine geplante Implantatbohrung auf. Das aus den optischen Messdaten erzeugte Ist-Messkörpermodell kann mit dem Soll-Messkörpermodell verglichen werden, um eine mögliche Abweichung festzustellen, die zu einer fehlerhaften Implantatbohrung führen würde.

Vorteilhafterweise kann, falls die Abweichung beim Vergleich des Ist-Messkörpermodells mit dem Soll-Messkörpermodell einen bestimmten Toleranzbereich überschreitet, eine Fehlermeldung erzeugt wird.

Der festgelegte Toleranzbereich ist abhängig von den Abmessungen des implantatgestützten Zahnersatzteils und vom Verlauf des Kieferknochens und der Nerven im Kiefer des Patienten. Die Abweichung der Ausrichtung des Ist-Messkörpermodells sollte beispielsweise einen Grenzwinkel von 5° nicht überschreiten. Beim Überschreiten des Toleranzbereichs wird eine optische und akustische Fehlermeldung erzeugt, so dass der Benutzer eine Rückmeldung über die fehlerhafte Positionierung der Bohrschablone bekommt. Die Bohrschablone kann dann entsprechend nachbearbeitet werden, um beispielsweise durch die Herstellung bedingte Unebenheiten auf der Auflagefläche der Bohrschablone zu entfernen.

Vorteilhafterweise kann das Ist-Messkörpermodell und/oder das Soll-Messkörpermodell in Relation zu den Messdaten der Vermessung für die Überprüfung und/oder in Relation zu den Messdaten der ursprünglichen Vermessung für die Implantatplanung mittels einer Anzeigevorrichtung angezeigt werden.

Dadurch kann der Benutzer die Lage des simulierten Ist-Messkörpermodells in Relation zum Soll-Messkörpermodell visuell überprüfen.

Vorteilhafterweise können die Zahnstrukturen des Kieferbereichs zum Aufsetzen der Bohrschablone Zähne, Kronen und/oder Zahnstümpfe in der Mundhöhle des Patienten sein.

Dadurch wird die Bohrschablone unmittelbar in der Mundhöhle des Patienten überprüft. Die Bohrschablone wird unmittelbar auf Zahnstrukturen des präparierten Kieferbereichs aufgesetzt. Anschließend erfolgt die optische dreidimensionale Vermessung in der Mundhöhle des Patienten, wobei sowohl der Messkörper als auch Teile der Zahnstrukturen, die nicht von der Bohrschablone überdeckt sind, erfasst werden.

Vorteilhafterweise können die Zahnstrukturen des Kieferbereichs zum Aufsetzen der Bohrschablone zumindest Teile eines Abdruckmodells des Kieferbereichs sein.

Dadurch wird die Bohrschablone auf Zahnstrukturen des Abdruckmodells des präparierten Kieferbereichs aufgesetzt. Die Überprüfung der Bohrschablone kann daher mittelbar am Abdruckmodell in einem zentralen Dentallabor erfolgen. Vorteilhafterweise kann der Messkörper im eingesteckten Zustand über die Bohrschablone hinausragen.

Dadurch kann der Messkörper bei der optischen dreidimensionalen Vermessung besser erfasst werden.

Der Messkörper weist einen Passkörper auf, der in die Bohrerführung der Bohrschablone gesteckt wird. Der Messkörper weist an der Verbindungsstelle zum Passkörper eine Anschlagsfläche auf, die im eingesteckten Zustand auf der Anschlagsfläche der Bohrschablone liegt. Vorteilhafterweise kann der Passkörper als ein Zylinder ausgestaltet sein, dessen Zylinderdurchmesser dem Durchmesser der Bohrerführung der Bohrschablone entspricht. Dadurch kann der Passkörper auf eine einfache Art und Weise passend zum verwendeten Bohrer hergestellt werden. Vorteilhafterweise kann der Messkörper in die Bohrerführung bis zu der Anschlagsfläche der Bohrschablone eingebracht werden, so dass die Einstecktiefe und damit der Abstand des Messkörpers von der Anschlagsfläche bekannt sind.

Dadurch kann in Kenntnis der Abmessungen des zu verwendenden Bohrers, der Lage und der Orientierung des Messkörpers das Ist-Implantatbohrungsmodell der durchzuführenden Implantatbohrung genau simuliert werden.

### Kurzbeschreibung der Zeichnungen

Die Erfindung wird anhand der Zeichnungen erläutert. Es zeigt, die
- Fig. 1: eine Skizze zur Verdeutlichung eines ersten Schritts des Verfahrens, wobei eine Bohrschablone zur Überprüfung auf Zahnstrukturen aufgesetzt wird;
- Fig. 2: eine Skizze zur Verdeutlichung eines weiteren Schritt des Verfahrens, wobei die erzeugten dreidimensionalen optischen Messdaten mittels einer Anzeigevorrichtung angezeigt werden.

### Ausführungsbeispiel

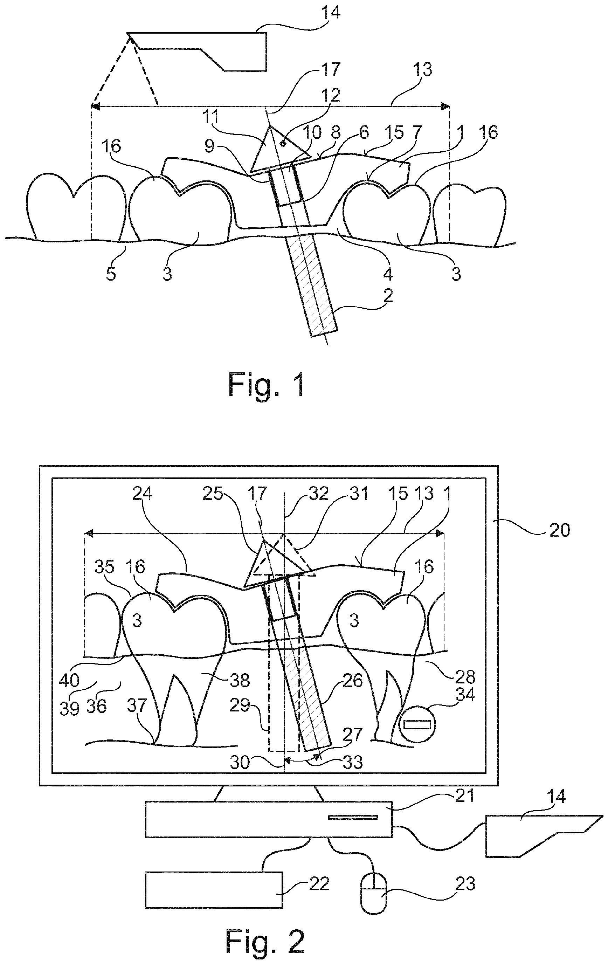

Die Fig. 1 zeigt zur Verdeutlichung des vorliegenden Verfahrens eine Bohrschablone 1, die zur Überprüfung vor der Durchführung einer geplanten Implantatbohrung 2 auf Zahnstrukturen 3 aufgesetzt wird. Die Zahnstrukturen 3 sind die zu einem Präparationsbereich 4 benachbarte Zähne oder Teile eines Abdruckmodells eines mit einem implantatgestützten Zahnersatzteil zu versehenden Kieferbereichs 5. Die Bohrschablone 1 weist eine zylinderförmige Bohrerführung 6, eine Auflagefläche 7 und eine Anschlagsfläche 8 auf. In die Bohrerführung 6 ist ein zylindrischer Passkörper 9 eingesetzt, der den gleichen Durchmesser wie die Bohrerführung 6 aufweist. Am oberen Ende des Passkörpers 9 ist ein kegelförmiger Messkörper 11 angeordnet. Der Messkörper 11 kann auch eine oder mehrere geometrische Grundformen, wie ein Rechteck, eine Kugel oder eine Pyramide aufweisen. Der Messkörper 11 ist mit optischen Markierungen 12 versehen. Der Messkörper 11 kann jedoch auch ohne optische Markierungen ausgestaltet sein, so dass die Lage und Ausrichtung des Messkörpers 11 aus der Form ableitbar sind. Der Kieferbereich 5 wird in einem Messbereich 13, der durch die gestrichelten Linien und den waagrechten Pfeil angedeutet ist, mittels eines optischen dreidimensionalen Verfahrens unter Verwendung einer entsprechenden Messvorrichtung 14 vermessen. Die Messvorrichtung 14 kann dabei ein dentales Handstück sein, das nach dem so genannten Streifenprojektionsverfahren zur Erfassung dreidimensionale Objekte funktioniert. Bei der optischen dreidimensionalen Vermessung mittels der Messvorrichtung 14 werden dreidimensionale Messdaten erzeugt, die sowohl die Oberfläche 15 der Bohrschablone als auch zumindest einen Teil 16 der Zahnstrukturen 3 umfassen, die nicht von der Bohrschablone 1 bedeckt sind. Anhand der erzeugten optischen Messdaten kann die genaue Lage und Ausrichtung des Messkörpers 11 entlang der Längsachse 17 bestimmt werden, um daraus die Lage und Ausrichtung der herzustellenden Implantatbohrung 2 zu bestimmen.

Die Fig. 2 zeigt einen weiteren Schritt des vorliegenden Verfahrens, wobei die bei der optischen dreidimensionalen Vermessung für die Überprüfung erzeugten Messdaten des Messbereichs 13 aus Fig. 1 mittels einer Anzeigevorrichtung 20, wie eines Monitors, graphisch dargestellt werden. Die Messdaten des Messbereichs 13 beinhalten die Oberfläche 15 der Bohrschablone 1 und Teile 16 der Zahnstrukturen 3, die nicht von der Bohrschablone 1 überdeckt sind. Die Anzeigevorrichtung 20 ist an einen Computer 21 angeschlossen, der die mittels der Messvorrichtung 14 erzeugten Messdaten verarbeitet. An den Computer 21 sind Eingabegeräte, wie eine Tastatur 22 und eine Maus 23, angeschlossen. Aus den optischen dreidimensionalen Messdaten 24 wird unter Verwendung bekannter Mustererkennungsverfahren oder durch manuelle Auswahl mittels der Eingabegeräte 22, 23 ein virtuelles Ist-Messkörpermodell 25 des Messkörpers 11 bestimmt. Die Anschlagsfläche 8 aus Fig. 1 dient sowohl als Anschlag für den Messkörper 11 als auch als Anschlag für den zu verwendeten Bohrer. Unter Verwendung der bekannten Abmessungen des zu verwendenden Bohrers kann daher aus der Lage und Orientierung des virtuellen Ist-Messkörpermodells 25 ein virtuelles Ist-Implantatbohrungsmodell 26 bestimmt werden. Das virtuelle Ist- Implantatbohrungsmodell 26 kann auch ohne der Erzeugung eines virtuellen Ist-Messkörpermodells 25 simuliert werden, wobei das Ist- Implantatbohrungsmodell 26 unmittelbar aus den Positionen der Markierungen 12 oder aus der Lage und Ausrichtung des Messkörpers 11 berechnet wird. Die Längsachse des Ist-Messkörpermodells 17 stimmt mit der Längsachse 27 des Ist-Implantatbohrungsmodells 26 überein. Bei einer vorangehenden Implantatplanung wird unter Berücksichtigung des Verlaufs eines Kieferknochens 28 und den Abmessungen des nicht dargestellten implantatgestützten Zahnersatzes ein Soll-Implantatbohrungsmodell 29 erzeugt, das gestrichelt dargestellt ist und eine Längsachse 30 aufweist. Bei der Implantatplanung kann auch ein virtuelles Soll-Messkörpermodell 31 mit einer Längsachse 32 erzeugt werden. Mittels des Computers 21 erfolgt ein Vergleich zwischen dem Ist-Implantatbohrungsmodell 26 und dem Soll-Implantatbohrungsmodell 29, wobei eine Abweichung, wie ein Winkel 33 zwischen der Längsachse 27 und der Längsachse 30, festgestellt wird. Falls der Winkel 33 einen bestimmten Toleranzbereich, wie beispielsweise einen Winkel von 5°, überschreitet, leuchtet eine Fehlermeldung 34 auf, die als ein graphisches Symbol dargestellt ist. Dadurch kann der Benutzer feststellen, dass die Abweichung außerhalb des Toleranzbereichs liegt und eine Nachbearbeitung der überprüften Bohrschablone 1 notwendig ist. Eine Ursache für die Abweichung können beispielsweise durch Herstellung bedingte Unebenheiten auf der Auflagefläche 7 sein. Diese Unebenheiten können bei einer Nachbearbeitung entfernt werden. Ein Verkanten beim Aufsetzen der Bohrschablone 1 auf die Zahnstrukturen 3 kann ebenfalls eine Ursache für die Abweichung zwischen dem Ist-Implantatbohrungsmodell und dem Soll-Implantatbohrungsmodell sein. In einem zusätzlichen bzw. alternativen Verfahrensschritt kann das Ist-Messkörpermodell 25 mit dem Soll-Messkörpermodell 31 verglichen werden und überprüft werden, ob die Abweichung innerhalb eines bestimmten Toleranzbereichs liegt. Falls dieser Toleranzbereich überschritten wird, wird die Fehlermeldung 34 erzeugt.

Mittels bekannter Mustererkennungverfahren wird der sichtbare Teil 16 der Zahnstrukturen 3, der nicht von der Bohrschablone 1 bedeckt ist, sowohl in den dreidimensionalen optischen Messdaten 24 für die Überprüfung als auch in dreidimensionalen optischen Messdaten 35 einer vorangegangenen Vermessung für die Implantatplanung erkannt und in Überlagerung gebracht werden. Die ursprünglichen optischen Messdaten sind mit dreidimensionalen Röntgendaten 36 einer Röntgenmessung für die Implantatplanung verknüpft. Dadurch können die Lage und die Ausrichtung des Ist-Messkörpermodells 25 oder des Ist-Implantatbohrungsmodells 26 relativ zu den ursprünglichen optischen Messdaten 35 und zu den Röntgendaten 36 für die Implantatplanung bestimmt werden. Die ursprünglichen Röntgendaten 36 für die Implantatplanung weisen kritische Strukturen, wie Nerven 37, Zahnwurzeln 38, den Kieferknochen 39 oder den Verlauf der Gingiva 40, auf. Dadurch kann der Benutzer die Lage des simulierten Ist-Implantatbohrungsmodells 26 im Hinblick auf diese kritischen Strukturen visuell überprüfen und gegebenenfalls korrigieren, indem die Bohrschablone entsprechend angepasst wird.

### Bezugszeichen

- 1: Bohrschablone
- 2: Implantatbohrung
- 3: Zahnstrukturen
- 4: Präparationsbereich
- 5: Kieferbereich
- 6: Bohrerführung
- 7: Auflagefläche
- 8: Anschlagsfläche
- 9: Passkörper
- 11: Messkörper
- 12: optische Markierung
- 13: Messbereich
- 14: Messvorrichtung
- 15: Oberfläche
- 16: Teil der Zahnstrukturen
- 17: Längsachse
- 20: Anzeigevorrichtung
- 21: Computer
- 22: Tastatur
- 23: Maus
- 24: dreidimensionale Messdaten
- 25: Ist-Messkörpermodell
- 26: Ist-Implantatbohrungsmodell
- 27: Längsachse
- 28: Kieferknochen
- 29: Soll-Implantatbohrungsmodell
- 30: Längsachse
- 31: Soll-Messkörpermodell
- 32: Längsachse
- 33: Winkel
- 34: Fehlermeldung
- 35: ursprüngliche dreidimensionale optische Messdaten
- 36: dreidimensionale Röntgendaten
- 37: Nerven
- 38: Zahnwurzeln
- 39: Kieferknochen
- 40: Gingiva

## Patentansprüche

1. Verfahren zur Überprüfung einer Bohrschablone (1) vor der Durchführung einer Implantatbohrung (2) für einen implantatgestützten Zahnersatz, wobei die hergestellte Bohrschablone (1) eine Bohrerführung (6) aufweist und auf im Bereich der durchzuführenden Implantatbohrung (2) vorhandene Zahnstrukturen (3) eines mit dem Zahnersatz zu versehenden Kieferbereichs (13) aufgesetzt wird, wobei ein Messkörper (11) in die Bohrerführung (6) der Bohrschablone (1) gesteckt wird, wobei der Messkörper (11) im eingesteckten Zustand über die Bohrschablone (1) hinausragt, wobei der Messkörper (11) und zumindest ein Teilbereich (16) der Zahnstrukturen (3), die nicht von der Bohrschablone (1) bedeckt sind, unter Verwendung eines optischen dreidimensionalen Messverfahrens vermessen werden, wobei aus erzeugten Messdaten (24) der optischen Vermessung die Lage und die Orientierung des Messkörpers (11) relativ zu dem Teilbereich (16) der Zahnstrukturen (3) bestimmt werden, wobei anhand der optischen Messdaten (24) unter Verwendung der bestimmten Lage und der Orientierung des Messkörpers (11) ein virtuelles Ist-Implantatbohrungsmodell (26) erzeugt wird, wobei das Ist-Implantatbohrungsmodell (26) bezüglich seiner Lage und seiner Orientierung mit einem geplanten virtuellen Soll-Implantatbohrungsmodell (29) aus einer vorangegangenen Implantatplanung verglichen wird, wobei der Messkörper (11) in die Bohrerführung bis zu einer Anschlagsfläche (8) an der Bohrschablone (1) eingebracht wird, so dass die Einstecktiefe und damit der Abstand des Messkörpers (11) von der Anschlagsfläche (8) bekannt sind, wobei der Messkörper (11) einen Passkörper (9) aufweist, der in die Bohrerführung (6) der Bohrschablone (1) gesteckt wird, wobei der Messkörper (11) so gestaltet ist, dass seine Lage und seine Ausrichtung mittels des optischen dreidimensionalen Messverfahrens eindeutig ermittelbar ist.

2. Verfahren nach Anspruch 1, wobei, falls die Abweichung beim Vergleich des Ist-Implantatbohrungsmodells (26) mit dem Soll-Implantatbohrungsmodell (29) einen bestimmten Toleranzbereich überschreitet, eine Fehlermeldung (34) erzeugt wird.

3. Verfahren nach Anspruch 1 oder 2, wobei das Ist-Implantatbohrungsmodell (26) und/oder das Soll-Implantatbohrungsmodell (29) in Relation zu den Messdaten (24) der optischen Vermessung für die Überprüfung und/oder in Relation zu den ursprünglichen Messdaten (35, 36) für die Implantatplanung mittels einer Anzeigevorrichtung angezeigt werden.

4. Verfahren nach einem der Ansprüche 1 bis 3, wobei aus den Messdaten der optischen Vermessung für die Überprüfung ein virtuelles Ist-Messkörpermodell (25) erzeugt wird.

5. Verfahren nach Anspruch 4, wobei das erzeugte Ist-Messkörpermodell (25) mit einem Soll-Messkörpermodell (31) aus einer vorangegangenen Implantatplanung verglichen wird.

6. Verfahren nach Anspruch 5, wobei, falls die Abweichung beim Vergleich des Ist-Messkörpermodells (25) mit dem Soll-Messkörpermodell (31) einen bestimmten Toleranzbereich überschreitet, eine Fehlermeldung (34) erzeugt wird.

7. Verfahren nach einem der Ansprüche 4 bis 6, wobei das Ist-Messkörpermodell (25) und/oder das Soll-Messkörpermodell (31) in Relation zu den Messdaten (24) der Vermessung für die Überprüfung und/oder in Relation zu den ursprünglichen Messdaten (35, 36) für die Implantatplanung mittels einer Anzeigevorrichtung angezeigt werden.

8. Verfahren nach einem der Ansprüche 1 bis 7, wobei die Zahnstrukturen (3) des Kieferbereichs (5) zum Aufsetzen der Bohrschablone (1) Zähne, Kronen und/oder Zahnstümpfe in der Mundhöhle des Patienten sind.

9. Verfahren nach einem der Ansprüche 1 bis 7, wobei die Zahnstrukturen (3) des Kieferbereichs (5) zum Aufsetzen der Bohrschablone (1) zumindest Teile eines Abdruckmodells des Kieferbereichs (5) sind.

10. Verfahren nach Anspruch 1, wobei der Passkörper (9) als ein Zylinder ausgestaltet ist, dessen Durchmesser dem Durchmesser der Bohrerführung (6) der Bohrschablone (1) entspricht.

## Claims

1. Method for checking a drilling template (1) prior to carrying out an implant drilling (2) for an implant-supported tooth replacement, wherein the produced drilling template (1) comprises a drill guide (6) and is placed onto tooth structures (3) of a jaw region (13) to be provided with the tooth replacement present in the region of the implant drilling (2) to be carried out, wherein a measuring body (11) is inserted into the drill guide (6) of the drilling template (1), wherein the measuring body (11) in the inserted state projects beyond the drilling template (1), wherein the measuring body (11) and at least one subregion (16) of the tooth structures (3) that is not covered by the drilling template (1) are measured using an optical three-dimensional measurement method, wherein the position and the orientation of the measuring body (11) relative to the subregion (16) of the tooth structures (3) are determined from generated measurement data (24) of the optical measurement, wherein a virtual actual implant drilling model (26) is produced on the basis of the optical measurement data (24) using the determined position and orientation of the measuring body (11), wherein the actual implant drilling model (26) is compared to a planned virtual target implant drilling model (29) from a previous implant plan with regard to its position and orientation, wherein the measuring body (11) is inserted into the drill guide as far as a stop surface (8) on the drilling template (1), so that the insertion depth and thus the distance of the measuring body (11) from the stop surface (8) are known, wherein the measuring body (11) comprises a fitting body (9) that is inserted into the drill guide (6) of the drilling template (1), wherein the measuring body (11) is designed such that its position and its orientation can be unambiguously determined by means of the optical three-dimensional measurement method.

2. Method according to Claim 1, wherein an error message (34) is generated if the deviation in the comparison of the actual implant drilling model (26) with the target implant drilling model (29) exceeds a specific tolerance range.

3. Method according to Claim 1 or 2, wherein the actual implant drilling model (26) and/or the target implant drilling model (29) are displayed by means of a display device in relation to the measurement data (24) of the optical measurement for the check and/or in relation to the original measurement data (35, 36) for the planning of the implant.

4. Method according to any one of Claims 1 to 3, wherein a virtual actual measuring body model (25) is generated from the measurement data of the optical measurement for the check.

5. Method according to Claim 4, wherein the generated actual measuring body model (25) is compared with a target measuring body model (31) from a previous implant plan.

6. Method according to Claim 5, wherein an error message (34) is generated if the deviation in the comparison of the actual measuring body model (25) with the target measuring body model (31) exceeds a specific tolerance range.

7. Method according to any one of Claims 4 to 6, wherein the actual measuring body model (25) and/or the target measuring body model (31) are displayed by means of a display device in relation to the measurement data (24) of the measurement for the check and/or in relation to the original measurement data (35, 36) for the planning of the implant.

8. Method according to any one of Claims 1 to 7, wherein the tooth structures (3) of the jaw region (5) for placement of the drilling template (1) are teeth, crowns and/or tooth stumps in the oral cavity of the patient.

9. Method according to any one of Claims 1 to 7, wherein the tooth structures (3) of the jaw region (5) for placement of the drilling template (1) are at least parts of an impression model of the jaw region (5).

10. Method according to Claim 1, wherein the fitting body (9) is designed as a cylinder, the diameter of which corresponds to the diameter of the drill guide (6) of the drilling template (1).

## Revendications

1. Procédé de vérification d'un gabarit de forage (1) préalablement à la réalisation d'un forage pour implant (2) pour une prothèse dentaire montée sur implant, le gabarit de forage (1) fabriqué présentant un guide de foret (6) et étant placé sur des structures dentaires (3) présentes dans la zone où doit être réalisé le forage pour implant (2) dans une partie de mâchoire (13) destinée à recevoir la prothèse dentaire ; un corps de mesure (11) étant introduit dans le guide de foret (6) du gabarit de forage (1), le corps de mesure (11) introduit ressortant au-dessus du gabarit de forage (1) ; le corps de mesure (11) et au moins une zone partielle (16) des structures dentaires (3), qui ne sont pas recouvertes par le gabarit de forage (1), étant mesurés au moyen d'un procédé de mesure tridimensionnelle optique, la position et l'orientation du corps de mesure (11) par rapport à la zone partielle (16) des structures dentaires (3) étant déterminées à partir des données de mesure (24) issues de la mesure optique, un modèle de forage pour implant effectif (26) virtuel étant produit à l'aide des données de mesure optique (24) compte tenu de la position et de l'orientation déterminées du corps de mesure (11), le modèle de forage pour implant effectif (26) étant comparé, eu égard à sa position et à son orientation, à un modèle de forage pour implant de consigne (29) virtuel planifié issu d'une planification d'implant précédente, le corps de mesure (11) étant introduit dans le guide de foret jusqu'à une surface de butée (8) présente sur le gabarit de forage (1), de sorte que la profondeur d'insertion et, ainsi, la distance entre le corps de mesure (11) et la surface de butée (8) sont connues, le corps de mesure (11) présentant un corps d'ajustement (9) qui est placé dans le guide de foret (6) du gabarit de forage (1), le corps de mesure (11) étant conçu pour que sa position et son orientation puissent être déterminées clairement au moyen du procédé de mesure tridimensionnelle optique.

2. Procédé selon la revendication 1, dans lequel il est produit un signal d'erreur (34) dans le cas où l'écart lors de la comparaison du modèle de forage pour implant effectif (26) au modèle de forage pour implant de consigne (29) dépasse une plage de tolérance définie.

3. Procédé selon la revendication 1 ou 2, dans lequel le modèle de forage pour implant effectif (26) et/ou le modèle de forage pour implant de consigne (29) sont affichés au moyen d'un dispositif d'affichage par rapport aux données de mesure (24) issues de la mesure optique aux fins de la vérification et/ou par rapport aux données de mesure d'origine (35, 36) aux fins de la planification de l'implant.

4. Procédé selon une des revendications 1 à 3, dans lequel un modèle de corps de mesure effectif (25) virtuel est produit à partir des données de mesure issues de la mesure optique aux fins de la vérification.

5. Procédé selon la revendication 4, dans lequel le modèle de corps de mesure effectif (25) produit est comparé à un modèle de corps de mesure de consigne (31) issu d'une planification d'implant précédente.

6. Procédé selon la revendication 5, dans lequel il se produit un signal d'erreur (34) dans le cas où l'écart lors de la comparaison du modèle de corps de mesure effectif (25) au modèle de corps de mesure de consigne (31) dépasse une plage de tolérance définie.

7. Procédé selon une des revendications 4 à 6, dans lequel le modèle de corps de mesure effectif (25) et/ou le modèle de corps de mesure de consigne (31) sont affichés au moyen d'un dispositif d'affichage par rapport aux données de mesure (24) issues de la mesure aux fins de la vérification et/ou par rapport aux données de mesure d'origine (35, 36) aux fins de la planification d'implant.

8. Procédé selon une des revendications 1 à 7, dans lequel les structures dentaires (3) de la zone de mâchoire (5) pour le placement du gabarit de forage (1) sont des dents, des couronnes et/ou des moignons de dents dans la cavité buccale du patient.

9. Procédé selon une des revendications 1 à 7, dans lequel les structures dentaires (3) de la zone de mâchoire (5) pour le placement du gabarit de forage (1) font au moins partie d'un modèle de moulage de la zone de mâchoire (5).

10. Procédé selon la revendication 1, dans lequel le corps d'ajustement (9) est conçu sous la forme d'un cylindre dont le diamètre correspond au diamètre du guide de foret (6) du gabarit de forage (1).
